# EUROPEAN PATENT APPLICATION

(11) **EP 1 335 031 A1**
(43) Date of publication of application: **13.08.2003**
(21) Application number: 03001999.6
(22) Date of filing: 31.01.2003
(51) Int. Cl.: C22B 34/22, C22B 7/00

(54) **Process for the treatment of metalliferous residues in petroleum tars gasification plants**

(30) Priority: 05.02.2002 IT MI20020197
(71) Applicant: Corigliano, Francesco, 98168 Messina (IT)
(72) Inventor: Corigliano, Francesco, 98168 Messina (IT); Di Pasquale, Sebastiana, 98168 Messina (IT); Primerano, Patrizia, 98158 Messina (IT); Randazzo Pizzolo, Graziella, 00040 Pomezia (IT); Catalfamo, Paola, 98158 Faro Superiore, Messina (IT)
(74) Representative: Trupiano, Federica

(57) **Abstract**

Procedure for the recovery of a vanadium concentrate from the metalliferous residues of petroleum tar gasification which involves treatment of the initial suspension (comprising the particulate) in reducing conditions with selective extraction of the vanadium and dissolution of it, separation of the liquid phase obtaining a solution containing the vanadium, and precipitation of the vanadium from said solution for neutralisation of the same with a base.

## Description

The present invention refers to a procedure for recovering a vanadium concentrate from the metalliferous residues produced by the transformation of liquid fuels into gaseous products, in particular from the metalliferous residues of petroleum tar gasification, that is substantially free from sulphur and carbon and in a form such that it can be directly used for the production of ferrovanadium with high quality and good composition characteristics.

As it is known, in some petroleum tar gasification processes, for example in the TEXACO process, the mineral fraction of the tar, containing vanadium and nickel as the main components, is transformed into a solid particulate which is kept in suspension by the soot water in the scrubbing stage of the produced gases. At this point, the particulate, which has a high carbon content, is normally recycled after extraction with naphtha and separation of the same from the low carbon content itself, particulate which, instead, goes on to the next stage (grey water). According to this technique, if the particulate produced by the gasifier has an excess carbon content, for example higher than or equal to 60% (C≥60%), the extraction phase with naphtha may not permit effective separation. Furthermore, the extraction phase with naphtha has, in any case, the disadvantage of leaving variable but significant quantities of carbon and sulphur in the vanadium product, quantities which interfere with the subsequent production of ferro alloys.

Again according to the known art, precipitating and coagulating agents such as NH₃, NaOH, Ca(OH)₂, Fe₂(SO₄)₃, FeSO₄, CaCO₃, etc. are normally added to the suspension indicated previously as "grey water", with the disadvantage that some of the above agents tend to dissolve the vanadium so that, in many cases it is necessary the use of an excessive quantity of additives to obtain precipitation of the vanadium, said additives being subsequently difficult and expensive to separate. In fact the slurry which is separated by filtering from the clarified water is a combination and/or a mixture of the gasification residues and the additives added, with consequent disadvantages in the subsequent treatments. Said slurry is less rich in the precious vanadium and nickel components than it could be, with the consequence that gasification earns less money from sales (since earnings are proportionate to the percentage of useful components and penalised by those interfering with refinement) and purchasers face higher refinement costs.

As is known, the vanadium is the most valuable component in the above slurry; the leading sector in the demand for vanadium is that of special steels and therefore ferro alloys; among these, the most highly valued one with the biggest market is the iron-20-vanadium-80 alloy.

The aim of the present invention is to provide a procedure for the recovery of vanadium from metalliferous residues, produced by gasification of petroleum tar, which does not involve repeated precipitation and dissolution of the residue to be treated.

A further aim of the present invention is to provide a procedure for the recovery of vanadium from metalliferous residues, produced by gasification of petroleum tar, which does not involve extraction with naphtha of the initial suspension containing the particulate.

Yet another aim of the present invention is to provide a procedure for the recovery of vanadium from the metalliferous residues, produced by the gasification of petroleum tar, which does not involve the addition of additives, various type of coagulating and precipitating agents.

Another aim of the present invention is to provide a procedure for the recovery of vanadium from metalliferous residues, produced by gasification of petroleum tar, which does not undergo substantial variations depending on the carbon content of the starting material.

A further aim of the present invention is to obtain a solid with the maximum achievable concentration of vanadium oxides and the minimum amount of iron oxide and in any case with a V:Fe ratio equal or as close as possible to 80:20.

A further aim is to selectively separate the vanadium from the sulphur and carbon.

Yet another aim is to obtain, in relation to the process concerning the slurry which is rich in vanadium (concentration ≥ 15%), recovery of the occasionally poorer slurry (due to poorer batches of crude oil or due to other reasons) and low grade vanadium residues from other sources (petroleum ashes, spent catalysts, etc.).

These and other aims, and related advantages resulting from the following description, are achieved by a procedure for the recovery of vanadium from metalliferous residues produced by gasification of petroleum tar, said procedure, according to the present invention, comprising the following steps:
- treatment of the initial suspension, containing the particulate, in reducing conditions with selective extraction of vanadium and conversion of the same into solution form;
- separation of the liquid phase from the residual solid phase by means of filtering, centrifuging and similar, in order to obtain a solution containing vanadium and a solid residue containing sulphur (as sulphide), nickel, iron and unburnt carbon for re-use, for example, by recycling in the gasifier;
- precipitation of the vanadium from said solution containing vanadium by neutralisation of the solution with a base or with basic salts at a temperature between 20 and 80°C, so to obtain a precipitate containing both vanadium and iron, that can be used for the direct production of iron/vanadium alloy, and a solution to be recycled and/or disposed according to conventional procedures.

More in detail, said treatment of the initial suspension, containing vanadium in reducing conditions, can be achieved by direct saturation of the suspension with SO₂ gas, or by adding sulphite or appropriately acidified metabisulphite, within or over the stoichiometry of sulphurous acid.

Alternatively, said treatment of the initial suspension, containing vanadium in reducing conditions, can be obtained, for example, by exploiting reducing properties of the vanadium in an acid medium, for example, when it is in the V₂O₃ oxide form. Said reducing properties produce an effect both on the iron (III) which is reduced to iron (II), and on the vanadium (V) which is reduced to vanadium (IV). In this regard, sulphuric acid in a 10% watery solution is advantageously used, for example, to create the necessary acid environment and, as reducing agent, vanadium in the oxidation state 3+ is used, as it is commonly present in vanadium oxide V₂O₃. According to this preferred aspect, the phase of the process relating to treatment of the initial suspension is considerably simplified if, for example, the vanadium material that feeds the process is a mixture of ashes from combustion of petroleum derivatives that may contain iron (III) and vanadium (V) or in the case of residues or slurry from gasification of the derivatives themselves that mainly contain vanadium as V₂O₃. If the feed material consists only of combustion ashes, synthetic V₂O₃ can be used.

According to the present invention, the extraction stage with naphtha used in the processes according to the known art is advantageously replaced by the high yield dissolution phase of the vanadium present in the particulate whatever the carbon content. The initial suspension thus treated permits dissolution of the vanadium by saturation treatment, in reducing conditions, of the initial suspension containing SO₂, by the above-mentioned reducing agents or in reducing conditions achieved, for example as described above, with sulphuric acid or other equivalent acid and V₂O₃ as the reducing agent. The watery phase thus obtained is separated from the non-extracted residue and the vanadium is then re-precipitated in the form of a high titre, free from carbon and sulphur concentrate. Precipitation of the vanadium is obtained, as already said, by treatment of the solution with a base or basic salt and subsequent filtering or decanting of the obtained precipitate.

The process according to the present invention therefore provides for treatment of the initial suspension in reducing conditions, separation of the obtained watery phase and treatment of the latter with bases to obtain precipitation of the vanadium.

With respect to the processes of the known art, apart from different reaction conditions, there are clearly fewer stages, consequently obtaining greater vanadium yields and considerable advantages in economic terms.

A further advantage of the procedure according to the present invention is that high yields precipitation of the vanadium can be obtained without using, as in the processes according to the known art, coagulating and flocculant agents or additives of various types which, as already said, are difficult to eliminate. Again according to the invention, the vanadium is selectively separated from the sulphur and carbon which, as it is known, interfere with metallurgy, and it is also separated from the excess of nickel, which is not necessarily required for the production of vanadium steels and which, once separated, can be used for the production of refined metal. Elimination of the additives also avoids dilution and/or contamination of gasification residues, with consequent need to separate the same from the product, and resulting operating difficulties in addition to extra costs due to the need, as already pointed out, to obtain a vanadium-based solid characterised by a V:Fe ratio equal or as close as possible to 80:20.

Again according to the procedure of the invention, it is possible, in relation to the process concerning the slurry, rich in vanadium (concentration ≥ 15%), to recover the occasionally poorer slurry (for example due to poorer batches of crude oil or for other reasons) and low grade vanadium residues from other sources (petroleum ashes, spent catalysts, etc.). This results in a considerable economic advantage for the gasifiers, determined by numerous factors as outlined below:
a)possibility of substantial returns from sale of the vanadium concentrate instead of the current expenditure for conveyance/withdrawal;
b)greater simplicity in management and lower production costs plant, if it is based on saturation of the starting suspension with SO₂ gas instead of extraction of the same with naphtha;
c) saving resulting from non-use of iron salts in the final phase of precipitation of the vanadium;
d)total conversion of the carbon into a useful product (CO) via complete recycling;
e) expediency of treating in the same plant and in the same way solid combustion residues of heavy petroleum derivatives (fuel oil, petroleum coke, orimulsion) produced by electric power plants, with the dual advantage of disposal of hazardous waste and the possibility of obtaining extractable vanadium and nickel from the same.

The solid phase obtained according to the present invention, i.e. without the addition of various coagulants and additives, is much richer in the precious components vanadium and nickel.

According to the procedure subject of the invention, and as already previously said, no additives are introduced into the watery suspension resulting from the scrubbing, except for the reducing agent that determines selective dissolution of the vanadium in the watery phase, for example the above-mentioned SO₂, sulphite or metabisulphite appropriately acidified. Alternatively, as already said, the reducing atmosphere may be created via the use of sulphuric acid or other equivalent strong acid and V₂O₃ as the reducing agent.

If the reducing atmosphere is created by means of SO₂, sulphite or metabisulphite, the vanadium is dissolved in a few minutes by saturation of the watery phase of the initial suspension with the above-mentioned reducing agents, in particular sulphur dioxide, at temperatures between 40 and 70°C.

This step is designed to selectively dissolve the vanadium and leave the sulphur (present as sulphide), the nickel and the unburnt carbon, in addition to the majority of the nickel, in the solid phase. The solution turns deep blue due to solubilisation of the vanadium.

As already said, at the end of the vanadium dissolution phase, the solid phase is separated from the liquid phase. The solid phase basically contains carbon, sulphur, nickel, iron and residual traces of vanadium. It can be recycled in the gasifier for complete transformation of the carbon into CO and, every 3-4 cycles, before the subsequent cycle, it can be treated with mineral acids for recovery of the most precious component, which is the nickel.

The deep blue solution phase contains essentially vanadium and neutralisation of the acidity is started with a base, for example ammonia, caustic soda, soda, lime, ammonium carbonate or other bases or basic salts, up to a pH value of 7±1 maintaining the temperature at 50±30°C. The solid phase obtained in this step, once separated, can be conveyed, after liming at low temperature (ammonia recovery), to the electric furnace to obtain ferrovanadium at maximum titre.

The watery solution resulting from the separation can be recycled 2-3 times before being discharged due to an excess accumulation of salts (NH₄Cl, (NH₄)₂SO₄, NaCI, Na₂SO₄, CaCl₂, etc.).

The procedure according to the present invention can be used with considerable advantages, and without requiring substantial modifications, also for the treatment of ashes of fuel oil, petroleum coke, orimulsion, tar and similar (in practice products of combustion, instead of gasification, of heavy fractions and derivatives of petroleum) typically produced by electric power plants powered by the above fuels, classified as hazardous waste by the current environmental regulations. In these cases, iron and nickel are present in the ashes not as sulphides but as sulphates and oxides; they dissolve with the vanadium and are then partially precipitated together with it in the vanadium concentrate.

The present invention is further described by means of the following practical implementation examples, given purely for illustrative purposes and not in any way restricting the invention.

### EXAMPLE 1

A 2.5 kg sample (on dry base) of soot, from gasification of a petroleum TAR, separated from the syngas by means of a water scrubber, contained approx. 62 g of vanadium (∼2.5% in weight on dry base). The excess water of the scrubber was separated and recycled, retaining only approx. 10 litres to form a slurry with the soot. The slurry underwent saturation with sulphur dioxide gas at a temperature of 70°C for approx. one minute. A few minutes after the treatment the watery phase of the slurry turned blue and, upon analysis, was found to contain vanadium in a concentration of around 0.1 M (extraction yield ∼80%), iron in a concentration of around 0.015 M and traces of nickel. It was separated from the undissolved residue (which remains black and is subsequently recycled in the gasifier with the original carbon content) and precipitated without modification of the temperature by the addition of gaseous ammonia, or ammonia in solution, until neutralisation (pH 6-8). At this point the vanadium precipitated completely in the form of ferric and ammonium hydrate polyvanadate which, limed at approx. 350°C to eliminate the water and ammonia (possible recycling of the latter at precipitation), was transformed into vanadium oxide with approx. 15% iron, falling within the specifications established for the supply of furnaces for ferrovanadium80 alloys.

### EXAMPLE 2

Identical to the previous one, except that the sample of soot contains approx. 120 g of vanadium (∼5% on dry base) and the blue watery phase is approx. 0.2 M vanadium (extraction yield ∼80%) and 0.03 M iron.

### EXAMPLE 3

A 1.5 kg sample (on dry base) of fuel oil ashes, from combustion of oil in a thermoelectric power plant, after separation from the fumes by means of an electrical precipitator, contained approx. 60 g of vanadium (∼4% in weight on dry base) and approx. 20 g each of iron and nickel.

The sample was poured into 10 litres of water saturated at 50°C with gaseous sulphur dioxide. A few minutes after mixing, the solution turned blue and analysis revealed that it contained vanadium in a concentration of around 0.11 M (extraction yield ∼95%) and iron and nickel in a concentration of around 0.027 M. It was separated from the undissolved residue (mainly carbon, subsequently recycled in the gasifier) and precipitated by the addition of gaseous ammonia until neutralisation (pH 6-8), while checking that the temperature remained between 20 and 80°C. At this point the vanadium was completely precipitated in the form of ferric and ammonium polyvanadate which, limed at approx. 350°C to eliminate the water and ammonia, was transformed into vanadium oxide containing between 10 and 15% iron. By agitating the filtrate with air and further alkalising with caustic soda (pH 9 - 9.5), a mixture of hydroxides precipitated, containing the nickel and the iron that had not precipitated before.

### EXAMPLE 4

Identical to the previous examples 1-3, except that: (a) the sample consisted of a mixture composed of 1.5 kg of the soot sample as per example 1 (containing ∼37 g vanadium equal to approx. 2.5% in weight on dry base) and 1.5 kg of the ashes as per example 3 (containing ∼60 g vanadium equal to approx. 4% in weight on dry base) and therefore contained overall approx. 97 g of vanadium; (b) the blue watery phase was approx. 0.17M vanadium (extraction yield ∼92%) and 0.03 M iron.

### EXAMPLE 5

Identical to the previous example 4, except that: a) the sample consisted of a mixture comprising 1.5 kg of the soot sample as per example 1 (containing approx. 37 g of vanadium equal to approx. 2.5% in weight on dry base) and 1.5 kg of orimulsion ashes (containing approx. 180 g of vanadium equal to approx. 12% in weight on dry base) and therefore contained overall 217 g of vanadium; b) the use of SO₂ gas in 10 litres of water in the mixture extraction treatment was replaced by an equal volume of 10% sulphuric acid; c) the blue watery phase was approx. 0.4 M vanadium (extraction yield approx. 92%) and 0.03 M iron.

### EXAMPLE 6

A sample of 1 kg (on dry base) of orimulsion ashes containing approx. 120 g of vanadium (approx. 12% in weight on dry base), 10 g of iron and 27 g of nickel were poured into 5 litres of 10% sulphuric acid containing 30 g of synthetic V₂O₃ and kept at 80-90°C for approx. one hour. The solution turned blue and, upon analysis, was found to contain vanadium in a concentration of around 0.5 M (extraction yield approx. 90%), iron around 0.003 M and nickel around 0.09 M. It was separated from the undissolved residue (subsequently disposed of as special waste) and precipitated by the addition of gaseous ammonia until neutralisation (pH 6-8), while checking that the temperature remained between 20 and 80°C. At this point the vanadium precipitated completely in the form of ferric and ammonium polyvanadate which, limed at approx. 350°C to eliminate the water and ammonia, was transformed into vanadium oxide containing less than 10% iron. By agitating the filtrate with air and further alkalising with lime-wash (pH 9 - 9.5), a precipitate was obtained comprising, among other components, nickel hydroxide.

## Claims

1. Procedure for recovery of vanadium from metalliferous residues of petroleum tar gasification comprising the following phases:
- treatment of the initial suspension containing the particulate in reducing conditions with selective extraction of the vanadium and dissolution of the same;
- separation of the liquid phase from the residual solid phase by means of filtering or centrifuging, obtaining a solution containing the vanadium and a solid residue comprising sulphur and/or nickel and/or iron and/or unburnt carbon;
- precipitation of the vanadium from said solution containing the vanadium by neutralisation of the solution with a base or with basic salts, obtaining a precipitate containing vanadium and iron.

2. Procedure according to claim 1, **characterised in that** said treatment of the initial suspension containing the vanadium in reducing conditions is performed by using a strong acid to create the necessary acid environment and vanadium in the oxidation state 3+.

3. Procedure according to claim 2, **characterised in that** said strong acid is sulphuric acid.

4. Procedure according to claim 3, **characterised in that** said sulphuric acid is in a 10% watery solution.

5. Procedure according to claim 2, **characterised in that** said vanadium in the oxidation state 3+ is V₂O₃.

6. Procedure according to claim 1, **characterised in that** said treatment of the initial suspension containing the vanadium in reducing conditions is performed by direct saturation of the suspension with SO₂ gas or by addition of sulphite or acidified metabisulphite.

7. Procedure according to claim 1, **characterised in that** said base or basic salt used for neutralisation of said solution containing the vanadium is chosen from ammonia, caustic soda, soda, lime, ammonium carbonate, sodium carbonate, calcium carbonate.

8. Procedure according to claim 1, **characterised in that** said neutralisation occurs at a temperature between 20 and 80°C.

9. Procedure according to claim 1, **characterised in that** said treatment of the initial suspension is performed with sulphur dioxide or with sulphite or acidified metabisulphite at a temperature between 40 and 70°C.

10. Procedure according to claim 1, **characterised in that** said solid residue is recycled in the gasifier for transformation of carbon into CO and/or nickel enrichment.

11. Procedure according to claim 1, **characterised in that** said precipitate containing vanadium and iron is used for the direct production of a high titre iron/vanadium alloy.

12. Use of the procedure according to claim 1, for recovery of vanadium from poor slurry and low grade vanadium residues.

13. Use of the procedure according to claim 1, for disposal of the ashes of fuel oil, petroleum coke, orimulsion, tar (produced by the combustion of heavy fractions and derivatives of petroleum).

14. Iron/vanadium based product that can be obtained according to the procedure as per claim 1.
